(19)

Europäisches
Patentamt
European
Patent Office
Office européen
des brevets

(11)　**EP 4 040 360 A1**

(12)　**EUROPEAN PATENT APPLICATION**

(43) Date of publication:
**10.08.2022　Bulletin 2022/32**

(21) Application number: **21218420.4**

(22) Date of filing: **13.11.2018**

(51) International Patent Classification (IPC):
**G06Q 10/10** $^{(2012.01)}$　　**G06Q 50/18** $^{(2012.01)}$

(52) Cooperative Patent Classification (CPC):
**G06Q 50/184; G06Q 10/10**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:　**27.11.2017　KR 20170159625**

(62) Document number(s) of the earlier application(s) in
accordance with Art. 76 EPC:
**18205977.4 / 3 489 873**

(71) Applicant: **Korea Invention Promotion
Association
Seoul 06133 (KR)**

(72) Inventors:
• **KWAK, Jung Ae
05710 106-305, 15, Songpa-daero 32-gil (KR)**

• **SONG, Sang Youp
13836 410-104, 85, Byeoryang-ro, Gwacheon-si
(KR)**
• **PARK, In Jae
03451 202, 19-9, Jeungsan-ro 21-gil (KR)**

(74) Representative: **Capasso, Olga et al
De Simone & Partners S.r.l.
Via Vincenzo Bellini, 20
00198 Roma (IT)**

Remarks:
•This application was filed on 30-12-2021 as a
divisional application to the application mentioned
under INID code 62.
•Claims filed after the date of filing of the application
/ after the date of receipt of the divisional application
(Rule 68(4) EPC).

(54)　**METHOD AND SYSTEM ON EVALUATING PATENT USING STRUCTURAL EQUATION MODEL**

(57)　According to an exemplary embodiment of the
present disclosure, a method of evaluating a patent using
a structural equation includes the steps of: receiving an
evaluation for an importance of a plurality of evaluation
factors required to build an evaluation model for each of
multiple predetermined evaluation indexes, from multiple
experts, to evaluate a registered patent; verifying the
evaluations of the plurality of experts for the importance
of the individual evaluation factors; setting the verified
evaluation factors as final evaluation factors; determining
impact indexes of the set evaluation factors required to
build an evaluation model for each evaluation index, using structural equation model analysis; generating an
evaluation model for each evaluation index using the set
evaluation factor, the set impact index, and a structural
equation; obtaining patent information; and generating
an evaluation result using the generated evaluation model and the obtained patent information for the patent to
be evaluated.

[FIG. 1]

EP 4 040 360 A1

**Description**

**BACKGROUND**

The present disclosure relates to a method for evaluating patents using a structural equation model, a system for performing the method, and a computer readable storage medium in which the method is stored, and more particularly, to a method for evaluating a grade of a patent by statistically processing a plurality of patent evaluation indexes using a structural equationmodel, a system for performing the method, andacomputer readable storage medium in which a computer program executing the method is stored.

In the knowledge-based and global economic societies, intangible intellectual properties such as patents, trademarks, designs, and copyrightable works are emerging as core elements of national and corporate competitiveness rather than tangible assets such as lands and capitals. In particular, the patent is a representative intellectual property of intangible assets and importantly used as an objective measure to measure a technology level and innovation competence of individuals, companies, and countries.

Since the patent gives an owner to exercise their exclusive rights for the invention for a certain period of time with respect to the new technical direction, the patent is very important for the company's profitability and stable business operations.

When the patent is registered through examination after filing an application, an exclusive status is maintained for 20 years from the filing date. However, patent maintenance fee needs to be paid to maintain the exclusive status.

Therefore, companies with a large number of held patents are burdened with patent maintenance fees so that some companies abandon the patent rights before 20 years from the filing date. In this case, in order to select patents to be abandoned, evaluation for the patents should precede. Technical valuation of the patents is divided into a market approach, a profit approach, and a cost approach.

The market approach is a method for calculating a relative value through comparison and analysis based on a value of the same or similar technique as a target technology traded in an active market. The profit approach is a method for converting economic benefits to be generated by technical commercialization during an economic life of the target technology into a present value by applying an appropriate discount rate. Finally, the cost approach is a method for calculating a value of the technology based on costs invested to develop the target technology or estimating a cost to develop or purchase a technology having the same economic effect and profit based on an alternative economic principle.

In the meantime, according to the technology valuation, experts survey and analyze data of the technology and market oligopoly by dividing technicality, rightness, marketability, and business feasibility of a target technology to suggest a subjective evaluation opinion and a final value is calculated in accordance with the collected opinions of the experts. Therefore, it takes a quite long time and a lot of money.

In order to save the time and costs for the technology valuation, the companies select patents to be abandoned by subjective judgements of a person in charge of the patent, instead of the experts, in many cases.

As a solution for this, a service which systematically valuates the patent is being introduced.

However, when an evaluation model is designed based on only some fragmentary factors or an evaluation model is designed using one multiple regression model, a reliability of the evaluation results is often questionable.

In the meantime, the background art of the present disclosure is disclosed in Korean Unexamined Patent Application Publication No. 10-2011-0068278.

**SUMMARY**

An object to be achieved by the present disclosure is to provide a patent grade evaluating method to which a structural equation model is applied to valuate patents by building an evaluation model having a high reliability so that evaluation factors in which a relative environment between technically similar patents is considered are appropriately reflected while reflecting a structural feature of the patent specification.

According to an aspect of the present disclosure, a patent evaluating method using a structure equation includes the steps of: receiving an evaluation for an importance of a plurality of evaluation factors required to build an evaluation model for each of a plurality of predetermined evaluation indexes, from a plurality of experts, to evaluate a registered patent, verifying the evaluations of the plurality of experts for the importance of the individual evaluation factors, setting the verified evaluation factors as final evaluation factors, determining impact indexes of the set evaluation factors required to build an evaluation model for each evaluation index, using structural equation model analysis, generating an evaluation model for each evaluation index using the set evaluation factor, the set impact index, and a structural equation, obtaining patent information, and generating an evaluation result using the generated evaluation model and the obtained patent information for the patent to be evaluated.

According to another aspect of the present disclosure, a patent evaluating system using a structure equation includes: at least one processor; and at least one memory, the at least one memory and the at least one processor store and execute commands which allow the system to perform operations and the operations includes receiving an evaluation for an importance of a plurality of evaluation factors required to build an evaluation model for each of a plurality of predetermined evaluation indexes, from a plurality of experts, to evaluate a registered patent, verifying the evaluations of the plurality of experts for the importance of the individual evaluation factors, setting the verified evaluation factors as final evaluation factors, determining impact indexes of the set evaluation factors required to build an evaluation model for each evaluation index, using structuralequationmodel analysis, and generating an evaluation model for each evaluation index using the set evaluation factor, the set impact index, and a structural equation.

According to still another aspect of the present disclosure, a patent evaluation model building method using a structure equation includes the steps of: receiving an evaluation for an importance of a plurality of evaluation factors required to build an evaluation model for each of a plurality of predetermined evaluation indexes, from a plurality of experts, to evaluate a registered patent, verifying the evaluations of the plurality of experts for the importance of the individual evaluation factors, setting the verified evaluation factors as final evaluation factors, determining impact indexes of the set evaluation factors required to build an evaluation model for each evaluation index, using structuralequationmodel analysis, and generating an evaluation model for each evaluation index using the set evaluation factor, the set impact index, and a structural equation.

According to the present disclosure, a large amount of patents is quickly evaluated at a low cost with an objective evaluation criterion to contribute to make a decision on whether to maintain annual registration of a patent right.

Further, evaluation information corresponding to evaluation indexes of rightness, technicality, and usability for one patent is generated to calculate patent evaluation information for every evaluation index.

Further, the patent evaluation information is generated for every technical field so that patent competitiveness of the patents in the corresponding technical field is analyzed to check statuses of the patents in the corresponding technical field and help to make a decision to maintain/manage the patents, and analyze companies which lead the technical field.

Items

1. A method of evaluating a patent using a structural equation implemented in a computer, the method comprising the steps of:

> generating an evaluation model for each evaluation index using a set evaluation factor, a set impact index, and a structural equation;
> obtaining information on each issued patent; and
> generating an evaluation result using the generated evaluation model and the obtained information of the patent to be evaluated;
> the method being characterized in that:

> > receiving from a plurality of experts an evaluation for an importance of each of a plurality of evaluation factors required to build an evaluation model for each of a plurality of predetermined evaluation indexes to evaluate an issued patent;
> > verifying the evaluations of the plurality of experts for the importance of the individual evaluation factors;
> > setting the verified evaluation factors as final evaluation factors; and
> > determining impact indexes of the set evaluation factors required to build an evaluation model for each evaluation index, using structural equation model analysis.

2. The method of evaluating a patent according to item 1, characterized in that one or more evaluation models generated using the structural equation vary depending on a technical field of the patent or an evaluation index.

3. The method of evaluating a patent according to item 1 or 2, characterized in that the evaluation index includes at least one of a rightness index, a technicality index, and a usability index.

4. The method of evaluating a patent according to item 1 or 2 or 3, characterized in that during the step of receiving of an evaluation for an importance of individual evaluation factors from a plurality of experts, an evaluation survey result for the importance of the individual evaluation factors performed on patent experts in every technical field is received.

5. The method of evaluating a patent according to item 1 or 2 or 3 or 4, characterized in that the step of verifying the evaluations of the plurality of experts for the importance of the individual evaluation factors includes the steps of:

verifying a content validity for every evaluation factor on the evaluation survey result for the importance of the individual evaluation factors; and

verifying reliability for every evaluation factor for the evaluation survey result on which the content validity verifying step is performed.

6. The method of evaluating a patent according to item 5, wherein the step of verifying the evaluations of the plurality of experts for the importance of the individual evaluation factors includes a degree of consensus and convergence degree verifying step of verifying a degree of consensus and a convergence degree for every evaluation factor on the evaluation survey result on which the reliability verifying step is performed.

7. The method of evaluating a patent according to item 1 or 2 or 3 or 4 or 5, characterized in that during the step of generating an evaluation model for an evaluation index using a structural equation, a mutual causal relationship between several variables which affect a dependent variable included in the evaluation model is analyzed.

8. A patent evaluating system using a structural equation, the system comprising:

one or more processors; and
at least one memory,
characterized in that the at least one memory and the one or more processors store and execute computer-executable instructions to perform operations and the operations includes:

receiving an evaluation for an importance of a plurality of evaluation factors required to build an evaluation model for each of a plurality of predetermined evaluation indexes, from a plurality of experts, to evaluate an issued patent;
verifying the evaluations of the plurality of experts for the importance of the individual evaluation factors;
setting the verified evaluation factors as final evaluation factors;
determining impact indexes of the set evaluation factors required to build an evaluation model for each evaluation index, using structural equation model analysis; and
generating an evaluation model for each evaluation index using the set evaluation factor, the set impact index, and a structural equation.

9. The patent evaluating system according to item 8, characterized in that one or more evaluation models generated using the structural equation vary depending on a technical field of the patent or an evaluation index.

10. The patent evaluating system according to item 8 or 9, characterized in that the evaluation index includes at least one of a rightness index, a technicality index, and a usability index.

11. The patent evaluating system according to item 8 or 9 or 10, characterized in that when an evaluation for an importance of individual evaluation factors is received from a plurality of experts, an evaluation survey result for the importance of the individual evaluation factors performed on patent experts in every technical field is received.

12. The patent evaluating system according to item 8 or 9 or 10 or 11, characterized in that the verifying the evaluations of the plurality of experts for the importance of the individual evaluation factors includes:

verifying a content validity for every evaluation factor on the evaluation survey result for the importance of the individual evaluation factors; and
verifying a reliability for every evaluation factor for the evaluation survey result on which the content validity verifying step is performed.

13. The patent evaluating system according to item 12, characterized in that the verifying of the evaluations of the plurality of experts for the importance of the individual evaluation factors includes:
verifying a degree of consensus and a convergence degree for every evaluation factor on the evaluation survey result on which the reliability verifying step is performed.

14. The patent evaluating system method of item 8 or 9 or 10 or 11 or 12, characterized in that in the generating of an evaluation model for an evaluation index using a structural equation, a mutual causal relationship between several variables which affect an dependent variable included in the evaluation model is analyzed.

**BRIEF DESCRIPTION OF THE DRAWINGS**

FIG. 1 is a flowchart of a patent evaluating method using a structural equation model according to an exemplary embodiment of the present disclosure;

FIG. 2 is a detailed flowchart of a step (a) of the present disclosure;

FIG. 3 is a view illustrating various evaluation models;

FIG. 4 is a diagram of a patent evaluating system using a structural equation model according to an exemplary embodiment of the present disclosure; and

FIG. 5 is an exemplary view illustrating a schematic configuration of a patent evaluating system using a structural equation model according to an exemplary embodiment of the present disclosure.

**DETAILED DESCRIPTION**

According to one embodiment, one or more evaluation models are generated by using structural equation may vary depending on a technical field of the patent or an evaluation index such as a rightness index, a technicality index, and a usability index.

According to one embodiment, an evaluation survey result for the importance of the individual evaluation factors performed by patent experts in the technical field of the patent to be evaluated may be used for the evaluation for an importance of each of a plurality of evaluation factors received from the experts.

According to another embodiment, the importance of the individual evaluation factors includes a degree of consensus and convergence degree verifying step of verifying a degree of consensus and a convergence degree for every evaluation factor on the evaluation survey result.

According to one embodiment, the step of verifying the evaluations of the plurality of experts for the importance of the individual evaluation factors includes the steps of verifying a content validity for every evaluation factor on the evaluation survey result for the importance of the individual evaluation factors and verifying reliability for every evaluation factor for the evaluation survey result on which the content validity verifying step is performed.

A mutual causal relationship between several variables which affect a dependent variable included in the evaluation model is analyzed during generation of the evaluation model.

Hereinafter, the present invention will be described more fully hereinafter with reference to the accompanying drawings, in which exemplary embodiments of the invention are shown. However, the present invention can be realized in various different forms, and is not limited to the exemplary embodiments described herein. Accordingly, the drawings and description are to be regarded as illustrative in nature and not restrictive. Like reference numerals designate like elements throughout the specification.

Terms including an ordinary number, such as first and second, are used for describing various constituent elements, but the constituent elements are not limited by the terms. The above terms are used only to discriminate one component from the other component. For example, without departing from the scope of the present invention, a first component may be referred to as a second component, and similarly, a second component may be referred to as a first component. Terms used in the present application are used only to describe specific exemplary embodiments, and are not intended to limit the present invention. A singular form may include a plural form if there is no clearly opposite meaning in the context.

In addition, unless explicitly described to the contrary, the word "comprise" and variations such as "comprises" or "comprising", will be understood to imply the inclusion of stated elements but not the exclusion of any other elements. Terms used throughout the specification, "~step of ~ing" or "step of~" do not mean "step for~".

Terminologies used in the specification are selected from general terminologies which are currently and widely used as much as possible while considering a function in the present invention, but the terminologies may vary in accordance with the intention of those skilled in the art, custom, or appearance of new technology. Further, in particular cases, the terminologies are arbitrarily selected by an applicant and in this case, the meaning thereof maybe described in a corresponding section of the description of the invention. Therefore, the terminology used in the specification is analyzed based on a substantial meaning of the terminology and the specification rather than a simple title of the terminology.

1. Structural equation modeling

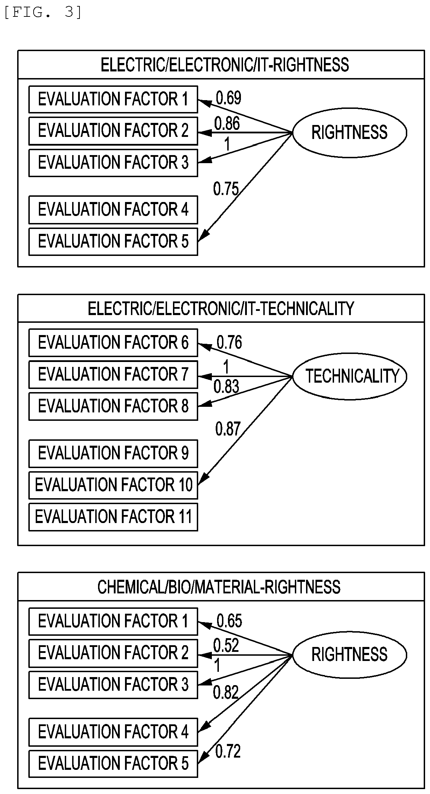

In the present disclosure, a structural equation modeling technique is applied to evaluate patents. The structural equation modeling (SEM) is characterized to find and analyzes mutual causal relationship between several variables which affect dependent variables to process factor analysis (impact analysis) and path analysis (procedure of patent evaluation) . The most important issue of the statistical approach is to construct a model which sufficiently approximates true principles of uncertain phenomena to know or probabilistically expresses the true principles. When a set of certain measurements for a phenomenon to know is a reaction variable or a random variable Y, the unknown phenomenon for an inquiry is expressed by a probability function of $f(Y|\theta)$ and $\theta$ is a set of parameters which are parameters of the random variable. Specifically, suppose that a researcher observes several types of variables, defines constructs using the variables, and then studies how these constructs are associated with each other. In this case, the researcher may construct various theoretical models, performs quantitative hypothesis testing for the suitability of each theoretical model, and find a model which is the most appropriate for the observed data and this process is referred to as a structural equation or a structural equation modeling (SEM). The structural equation may be a variable which is directly observed or is not measured and may be divided into a latent variable which is a latent factor of measurement variables and an observed variable which is directly measured. An exogenous (latent) variable is an independent latent variable and affects other latent variables. An endogenous (latent) variable is a dependent variable and is directly or indirectly affected. The structural equation is an analysis method in which three analysis techniques of regression analysis, path analysis (PA), and confirmatory factor analysis (CFA) are combined. In the present disclosure, as illustrated in FIG. 3, the path analysis which analyzes an impact index of each evaluation factor and connects the evaluation factors is applied.

2. Patent evaluating method using structural equation according to an exemplary embodiment of the present disclosure

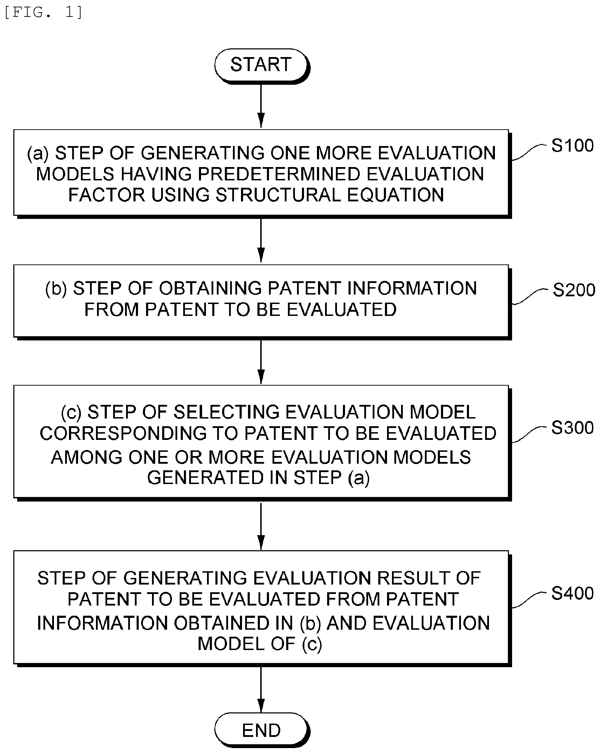

FIG. 1 is a flowchart of a patent evaluating method using a structural equation according to an exemplary embodiment of the present disclosure.

Hereinafter, a patent evaluating method using a structural equation according to an exemplary embodiment of the present disclosure will be described with reference to FIG. 1.

The patent evaluating method using a structural equation according to an exemplary embodiment of the present disclosure includes (a) a step S100 of generating one or more evaluation models having a predetermined evaluation factor using a structural equation, (b) a step S200 of obtaining patent information from a patent to be evaluated, (c) a step S300 of selecting an evaluation model corresponding to the patent to be evaluated among one or more evaluation models generated in step S100, and (d) a step S400 of generating an evaluation result of the patent to be evaluated based on the patent information obtained in step S200 and the evaluation model selected in step S300.

In the meantime, in the step (b) S200, the patent information obtained from the patent to be evaluated refers to relevant information generated in association with the patent from the time of occurrence to the expiration of one patent, including an application form including a patent specification and drawings, an examination history, progress information (administrative information) after registration of rights. The patent information may include a technical field of the patent, application information, examination information, registration information, patent right information, patent trial information, and litigation information.

More specifically, the application information may include a number of independent claims, a length of an independent claim, a number of dependent claims, an average length of the dependent claim, a number of drawings, a length of a description of the invention, divisional application, a number of claims of priority, and a number of overseas patent families.

Further, the examination information may include a number of IPCs, early publication, accelerated examination, re-examination, a number of presented opinions, a number of provision of information, a total number of citation, a difference between citation and filing date, a number of papers/foreign patents among prior documents, a number of papers/foreign patents of cited documents. The registration information may include a number of annual registrations.

The patent right information may include a number of inventors, whether to determine registration for an extension of patent term, a number of licensees, a number of changed holders of right, a number of established pledge rights of a financial company.

In the meantime, the trial information may include a number of trials on invalidity, a number of appeals against decision of rejection, a number of quotation of trial to positive confirmation on the scope of rights, a number of rejection/withdraw/dismissal of trials to positive confirmation on the scope of rights, a number of rejection of trial to negative confirmation on the scope of rights, a number of quotation/withdraw/dismissal of trials to negative confirmation on the scope of rights, and a number of correction trials.

2- (a) Step of generating one or more evaluation models having predetermined evaluation factor using structural equation

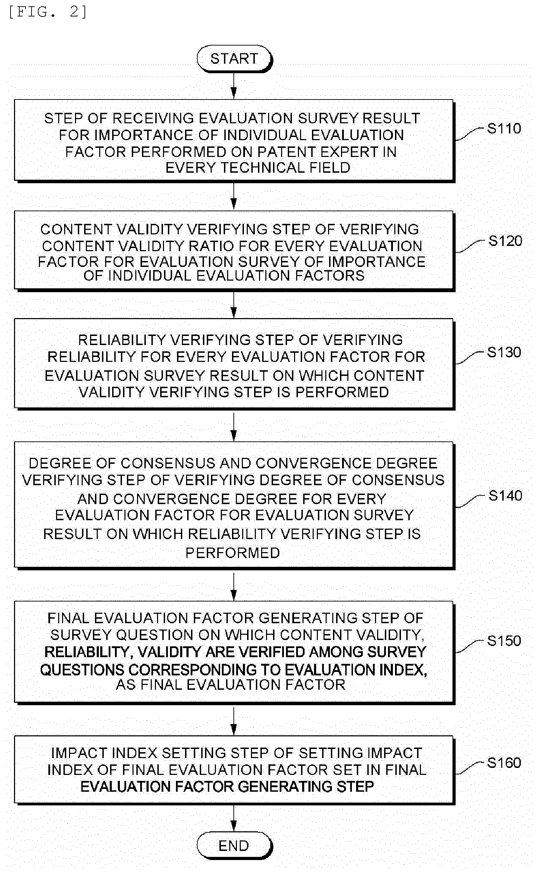

In the meantime, as one or more evaluation models generated in the step (a) S100, different evaluation models are generated depending on the technical field and the evaluation index of the patent. The evaluation index may be set to include an index indicating a degree for maintaining an exclusive status of the patent to be evaluated against a patent dispute with a third party (referred to as "rightness"), an index indicating a degree to which the patent to be evaluated accords with or leads the technology trend (referred to as technicality), and an index indicating a degree to which the patent to be evaluated is utilized in the business and an applicability (referred to as "usability"). In this step, an evaluation factor which is finally used in an evaluation model for each index exemplified as rightness, technicality, and usability is determined to generate an evaluation model. However, the indexes of rightness, technicality, and usability are not limited to indexes referring to only the meaning of the corresponding word, and may be applied to an index used in the similar manner to the corresponding index. In the meantime, FIG. 2 is a specific flowchart of a step (a) of the present disclosure.

A key point of the step (a) S100 of the present disclosure is to generate a final evaluation factor used to evaluate the patent. Specifically, the final evaluation factor for patent evaluation is a step of selecting patent information finally used among various patent information which may be used to calculate evaluation indexes of rightness, technicality, and usability.

Referring to FIG. 2, the step (a) S100 includes (a) a step S110 of performing an evaluation survey for an importance of patent information on patent experts in every technical field, (2) a content validity verifying step S120 of verifying content validity ratio for every patent information with respect to an evaluation survey result for an importance of patent information, (3) a reliability verifying step S130 of verifying a reliability for the evaluation survey result on which the content validity verifying step S120 is performed, (4) a degree of consensus and convergence degree verifying step S140 of verifying a degree of consensus and a convergence degree for the evaluation survey result on which the reliability verifying step S130 is performed, (5) a final evaluation factor generating step S150 of setting patent information for which content validity, reliability, degree of consensus, and convergence degree for the evaluation survey result corresponding to the evaluation index are verified, as a final evaluation factor, and (6) an impact index setting step S160 of setting an impact index of each final evaluation factor set in the final evaluation factor setting step. In the meantime, the final evaluation factor and the impact index may vary depending on the technical field of the patent and the evaluation index of the patent.

2-(a)-(1) Surveying step (evaluation factor precede evaluation quantifying step)

During the surveying step S110, an importance of individual evaluation factors (patent information) for patent evaluation is evaluated. In the present disclosure, survey evaluation results for individual evaluation factors of patent related experts are used. However, it should be noted that a major technical spirit of the present disclosure is to perform the pre-evaluating process on every evaluation factor to derive a final evaluation factor, rather than a survey process (human activity) performed by experts.

In the following Table 1, some of survey questions for selecting the final evaluation factor corresponding to the evaluation index are represented.

[Table 1]

| Survey questions | Strongly disagree | Disagree | Neutral | Agree | Strongly agree |
|---|---|---|---|---|---|
| | (1) | (2) | (3) | (4) | (5) |
| The more the independent claims, the higher the impact on rights | | | | | |
| The shorter the length of independent claim, the higher the impact on rights | | | | | |
| The more the dependent claims, the higher the impact on rights | | | | | |
| The more the claim series, the higher the impact on rights | | | | | |
| The more the drawings, the higher the impact on rights | | | | | |
| The longer the length of the description of the patent, the higher the impact on rights | | | | | |
| The more the divisional applications or claims of priority, the higher the impact on rights | | | | | |
| The more the overseas patent families, the higher the impact on rights | | | | | |
| The more the IPC assigned, the higher the impact on rights. | | | | | |

In the meantime, the survey questions represented in Table 1 are quantified by pre-evaluating an importance of individual evaluation factors by performing the survey for evaluation indexes (rightness, technicality, and usability) on a patent expert group for every technical field. As exemplified, five-point scale may be quantified but the score scale is not limited to the five-point scale.

Content validity verification (CVR: content validity ratio), reliability verification, and degree of consensus and convergence degree verification may be performed on the survey results.

2-(a)-(2): Step of verifying content validity of evaluation factor

More specifically, in the content validity verifying step S120, CVR is calculated for every survey result for every survey question and it is checked whether the calculated CVR value of the corresponding survey question satisfies a minimum CVR value in accordance with the number of survey respondents as presented in Lawshe (1975) of Table 2 and the patent information corresponding to unsatisfied survey question is removed from the evaluation factors.

[Table 2]

| Number of respondents | 5 | 6 | 7 | 8 | 9 | 10 | 11 | 12 | 13 | 14 | 15 | 20 | 25 | 30 | 35 | 40 |
|---|---|---|---|---|---|---|---|---|---|---|---|---|---|---|---|---|
| Min (CVR) | .99 | .99 | .99 | .75 | .78 | .62 | .59 | .56 | .54 | .51 | .49 | .42 | .37 | .33 | .31 | .29 |

$$CVR = (n_e - N/2)/(N/2)$$

$n_e$ : Number of answers that it is important, N : number of answers
(* C. H. Lawshe, "A quantitative approach to content validity" , Personnel psychology Vol.28, 1975)

2-(a)-(3): Step of verifying reliability of evaluation factor

During the reliability verifying step S130, the same concept is questioned with several questions and it is determined whether the items have similar values and the reliability may be verified by the following Cronbach alpha coefficient calculating equation. However, as for the reliabilityverifyingmethod, the reliability verification is not limited to the following Cronbach alpha coefficient calculating equation.

$$Ep^2 = \sigma^2(p)/[\sigma^2(p) + \sigma^2(\delta)]$$

$Ep^2$:Reliability coefficient, $\sigma^2(p)$ :variance, $\sigma^2(\delta)$ : relative error variance

In the meantime, the Cronbach alpha coefficient has a value between 0 and 1 and the higher the Cronbach alpha coefficient, the higher the reliability. For example, when the Cronbach alpha coefficient has a value of 0.8 to 0.9, it is determined that the reliability is very high and when the Cronbach alpha coefficient is 0.7 or higher, it is determined that the result is reliable.

In the present disclosure, when the Cronbach alpha coefficient for the survey result (5-point Likert scale) for specific patent information obtained as a result of an expert survey is 0.7 or smaller, the patent information is excluded from the evaluation factor.

2- (a) - (4) : Degree of consensus regarding evaluation factor and convergence degree verifying step

During the degree of consensus and convergence degree verifying step S140, the degree of consensus (i.e. Agreement·degree) and the convergence degree are verified based on a median, a first quartile (25%), and a third quartile (75%) using the following equation.

$$\text{Convergence degree}=(Q_3-Q_1)/2, \quad \text{Agreement degree}=(Q_3-Q_1/Mdn)$$

Mdn: Median, Q1 and Q3: First quartile (25%) and third quartile (75%), respectively

In the meantime, the closer the convergence degree is to 0, the smaller the deviation of the opinion and the closer the degree of consensus is to 1, the smaller the deviation of the opinion. In other words, the closer the convergence degree is to 0 and the closer the degree of consensus is to 1, the more proper the opinion.

As an application in the present disclosure, when the convergence degree calculated from the survey result for specific patent information is between 0 and 0.5 and the degree of consensus is between 0.75 and 1, it is determined that the opinion is proper.

2-(a)-(5): Final evaluation factor setting step

In the meantime, during the final evaluation factor setting step S150, among the survey items for every evaluation index, the survey questions (patent information) in which all the content validity, the reliability, the degree of consensus, and the convergence degree are verified are set as final evaluation factors and are applied to the structural equation to calculate an impact index for every final evaluation factor.

As described above, the final evaluation factor setting step is a step of setting evaluation factors remaining by excluding evaluation factors through the evaluation pre-evaluation result (expert survey), the content validity, the reliability, the degree of consensus, and the convergence degree verifying processes from evaluation factors (patent information) of each patent as final evaluation factors.

2-(a)-(6): Impact index calculating step of final evaluation factor

In the present disclosure, impact indexes for patent evaluation of the set final evaluation factors are set. More specifically, the impact index is a value indicating whether the evaluation factors are independent from each other (impact index = 0) or what kind of association is applied to the impact. As the impact index setting method, a Spearman sequence correlation analysis method, a Pearson correlation analysis method, a partial correlation analysis method, or a crossover analysis method may be used. The impact index is set such that any one element of the final evaluation factors is set as a reference (1.00) and the remaining elements are represented as relative impact indexes for the one element set as the reference.

2-(b): Patent information obtaining step

In the meantime, during (b) the step S200 of obtaining patent information from the patent to be evaluated, the patent information may be automatically obtained from a patent DB based on a unique identification number (Application number, Publication number, and Registered number) of the patent or the patent information of the patent to be evaluated may be input by a user. The obtained patent information refers to relevant information generated in association with the patent from the time of occurrence to the expiration of one patent, including an application form including a patent specification and drawings, an examination history, progress information (administrative information) after registration of rights. The patent information may include a technical field of the patent, application information, examination information, registration information, patent right information, patent trial information, and litigation information.

More specifically, the application information may include a number of independent claims, a length of an independent claim, a number of dependent claims, an average length of the dependent claim, a number of drawings, a length of a description of the invention, divisional application, a number of claims of priority, and a number of overseas patent families.

Further, the examination information may include a number of IPCs, early publication, accelerated examination, re-examination, a number of presented opinions, a number of provision of information, a total number of citation, a difference between a publication date of citation and a filing date of the patent to be evaluated, a number of papers/foreign patents among prior documents, a number of papers/foreign patents of cited documents. The registration information may include a number of annual registrations.

The patent right information may include a number of inventors, whether to determine registration for an extension of patent term, a number of licensees, a number of changed holders of right, a number of established pledge rights of a financial company.

In the meantime, the trial information may include a number of trials on invalidity, a number of appeals against decision of rejection, a number of quotation of trial to positive confirmation on the scope of rights, a number of rejection/withdraw/dismissal of trials to positive confirmation on the scope of rights, a number of rejection of trial to negative confirmation on the scope of rights, a number of quotation/withdraw/dismissal of trials to negative confirmation on the scope of rights, and a number of correction trials.

FIG. 3 is a view illustrating evaluation models according to various technical fields and evaluation indexes.

Referring to FIG. 3, it is confirmed that each evaluation model has one or more evaluation factors and each evaluation factor has an impact index corresponding to each elevation element.

More specifically, a rightness evaluation model in an electric/electronic/IT technical field has evaluation factors 1, 2, 3, and 5 and the impact indexes corresponding to evaluation factors are 0.69 for an evaluation factor 1, 0.86 for an evaluation factor 2, 1 for an evaluation factor 3, and 0.75 for an evaluation factor 5. Further, a technicality evaluation model in an electric/electronic/IT technical field has evaluation factors 4, 5, 6, and 8 and the impact index corresponding to each evaluation factor is as follows: 0.76 for an evaluation factor 4, 1 for an evaluation factor 5, 0.83 for an evaluation factor 6, and 0.87 for an evaluation factor 8. Therefore, it is confirmed that the evaluation factors and the impact indexes corresponding to the evaluation factors vary. In the meantime, in FIG. 3, the evaluation factors which are not connected to the rightness are not used as the evaluation elements for evaluating the rightness and in the same way, the evaluation factors which are not connected to the technicality are not used as the evaluation elements for evaluating the technicality.

In other words, even though the evaluation models are in the same technical field, if the evaluation index is different, the impact index corresponding to the evaluation factor of each evaluation model may be different.

In the meantime, even though the evaluation models are for the same evaluation index, if the technical field of the patent to be evaluated is different, the impact index corresponding to the evaluation factor of each evaluation model may be different.

For example, the rightness evaluation model in the electric/electronic/IT technical field has evaluation factors 1, 2, 3, and 5 and the impact indexes corresponding to the evaluation factors are 0.69 for an evaluation factor 1, 0.86 for an evaluation factor 2, 1 for an evaluation factor 3, and 0.75 for an evaluation factor 5 and the rightness evaluation model in the chemical/bio/material technical field has evaluation factors 1, 2, 3, 4, and 5 and the impact indexes corresponding to the evaluation factors are 0.65 for an evaluation factor 1, 0.52 for an evaluation factor 2, 1 for an evaluation factor 3, 0.82 for an evaluation factor 4, and 0.72 for an evaluation factor 5 so that it is confirmed that the impact indexes are different from each other.

2-(c): Application evaluation model selecting step

In the meantime, in the step (C) S300, for example, an evaluation model corresponding to the patent to be evaluated among one or more evaluation models, based on technical field information of the patent to be evaluated may be selected.

As described above, different evaluation factors and different impact indexes corresponding to the evaluation factor for every evaluation model are calculated depending on the technical field and the evaluation index so that only when the evaluation model corresponding to the patent to be evaluated is selected, an accurate evaluation result may be calculated.

In other words, when the technical field of the patent to be evaluated is electric/electronic/IT, if an evaluation model in the electric/electronic/IT technical field is selected, a reliable evaluation point may be calculated. In contrast, when the technical field of the patent to be evaluated is electric/electronic/IT but the evaluation model corresponding to the chemical/bio/material technical field is selected, since the evaluation index, the evaluation factor configuring the evaluation index, and the impact of the evaluation factor are different, an unreliable evaluation point may be calculated.

2-(d): Patent evaluation result generating step

In the meantime, during the evaluation result generating step S400 of a patent to be evaluated, the evaluation result may be generated by any one of a first method of generating the evaluation point as a comprehensive point by adding points corresponding to each evaluation index for the patent to be evaluated and a second method of generating the evaluation point for every evaluation index of the patent to be evaluated.

In the meantime, indexes of the rightness, technicality, and usability are assigned within a predetermined point. For example, the rightness point for the patent to be evaluated is assigned within 35 points, the technicality point is assigned within 35 points, and the usability point is assigned within 30 points. However, the points are not limited to the above-de scribed points and it is sufficient if a sum of the points of indexes is equal to the maximum value of the evaluation points . More specifically, as the evaluation result of specific individual patents calculated by the second method, points of the rightness, the technicality, and the usability index model are calculated as 33, 32, and 29, respectively and when the points are calculated by the first method, the points may be calculated as 94 obtained by adding 33, 32, and 29.

A specific calculating result equation for every evaluation index according to the second method may be set as follow.

$$y=a1*x1+a2*x2+\ldots+ai*xi$$

(x is each evaluation factor, a is a ratio of impact index of each evaluation factor to the total impact index, i is a natural number)

As described above, the impact index is set such that an impact index of a predetermined evaluation factor (reference evaluation factor) is set as 1 and then impact indexes of the remaining evaluation factors are set.

In the meantime, the patent evaluating method according to an exemplary embodiment of the present disclosure may further include an evaluation grade calculating step of calculating an evaluation grade of the patent to be evaluated based on the comprehensive point of the patent to be evaluated generated by the first method.

More specifically, during the evaluation grade calculating step, comprehensive points corresponding to all patents which are stored in the patent DB are calculated by the first method and then the comprehensive points corresponding to all the calculated patents are sorted in an ascending order and the grades may be divided according to a predetermined ratio.

Further, the evaluation grade of the patent to be evaluated may be calculated in accordance with a part of the grade divided by a predetermined ratio where the patent to be evaluated is located.

For example, the grade divided by a predetermined ratio is represented in the following Table 3.

[Table 3]

| Percentage | 4 | 7 | 12 | 17 | 20 | 17 | 12 | 7 | 4 |
|---|---|---|---|---|---|---|---|---|---|
| Cumulative percentage (%) | 4 | 11 | 23 | 40 | 60 | 77 | 89 | 96 | 100 |
| Grade | 1 | 2 | 3 | 4 | 5 | 6 | 7 | 8 | 9 |

A boundary value which divides the evaluation grade is exemplified as a percentage (%) and may also vary.

3. Patent evaluating process according to exemplary embodiment of the present disclosure

Hereinafter, a process of evaluating a patent in an electric/electronic/IT field using a patent evaluating method according to an exemplary embodiment of the present disclosure will be described.

A process of evaluating a patent "A" using a patent evaluating method according to an exemplary embodiment of the present disclosure includes (i) a step of obtaining patent information of a patent "A", (ii) a step of selecting an evaluation model matching the patent information of the patent "A" of the step (i), and (iii) a step of generating a patent evaluation result for the patent "A" based on the patent information and the evaluation model of the patent "A" in the steps (i) and (ii) .

More specifically, the patent information of the patent "A" obtained in the step (i) refers to relevant information generated in association with the patent from the time of occurrence to the expiration of one patent, including an application form including a patent specification and drawings, an examination history, progress information (administrative information) after registration of rights. The patent information may include a technical field of the patent, application information, examination information, registration information, patent right information, patent trial information, and litigation information.

More specifically, the application information may include a number of independent claims, a length of an independent claim, a number of dependent claims, an average length of the dependent claim, a number of claim series, a number of drawings, a length of a description of the invention, divisional application, a number of claims of priority, and a number of overseas patent families.

Further, the examination information may include a number of IPCs, early publication, accelerated examination, re-examination, a number of presented opinions, a number of provision of information, a total number of citation, a difference between citation and filing date, a number of papers/foreign patents among prior documents, a number of papers/foreign patents of cited documents. The registration information may include a number of annual registrations.

The patent right information may include a number of inventors, whether to determine registration for an extension of patent term, a number of licensees, a number of changed holders of right, a number of established pledge rights of a financial company.

In the meantime, the trial information may include a number of trials on invalidity, a number of appeals against decision of rejection, a number of quotation of trial to positive confirmation on the scope of rights, a number of rejection/withdraw/dismissal of trials to positive confirmation on the scope of rights, a number of rejection of trial to negative confirmation on the scope of rights, a number of quotation/withdraw/dismissal of trials to negative confirmation on the scope of rights, and a number of correction trials.

In the meantime, the method of selecting an evaluation model matching the patent information in the step (ii) may be a step of selecting an evaluation model corresponding to the technical field of the patent "A" and an index to be evaluated. For example, when the patent "A" is a patent in the electric/electronic/IT technical field and the rightness is evaluated, an evaluation model indicating a rightness index is selected from the evaluation model DB. When comprehensive evaluation for all evaluation indexes of the patent "A" is required, all evaluation models corresponding to the evaluation indexes may be selected. In the meantime, after selecting the evaluation model through the above-described process, patent information of the patent "A" corresponding to the final evaluation factor of each evaluation model selected in the step (iii) may be input in the step (iii).

Table 4 represents evaluation factors of the evaluation model indicating the rightness index of the electric/electronic/IT technical field and impact indexes for each evaluation factor and Table 5 represents "A" patent information corresponding to the evaluation model.

[Table 4]

| Patent information classification | Electric·Electronic·IT rightness evaluation model | |
|---|---|---|
| | Evaluation factor | Impact index |
| Application information | Number of independent claims | 1. 00 |
| | Length of independent claim | 0.71 |
| | Number of divisional applications and claims of priority | 0.68 |
| | Number of overseas patent families | 0.50 |
| Examination information | Number of provision information | 1.00 |
| | Total number of citation | 0.20 |
| | Number of papers of cited documents/foreign patents | 0.61 |
| Registration information | Number of annual registrations | 1.00 |
| Patent right information | Whether to determine registration for an extension of patent term | 1. 00 |
| | Number of licensees | 0.52 |
| | Number of changed holders of right | 0.78 |
| Trial information | Number of trials on invalidity | 1. 00 |
| | Number of quotation of trial to positive confirmation on | 0.81 |
| | the scope of rights | |
| | Number of rejection of trial to negative confirmation on the scope of rights | 0.96 |
| | Number of correction trials | 0.15 |

[Table 5]

| Patent information classification | 뭐? patent information | |
|---|---|---|
| | Evaluation factor | Points |
| Application information | Number of independent claims | 1 |
| | Length of independent claim | 5 |
| | Number of divisional applications and claims of priority | 0 |
| | Number of overseas patent families | 3 |
| Examination information | Number of provision information | 3 |
| | Total number of citation | 6 |
| | Number of papers of cited documents/foreign patents | 2 |
| Registration information | Number of annual registrations | 5 |
| Patent right information | Whether to determine registration for an extension of patent term | 5 |
| | Number of licensees | 1 |
| | Number of changed holders of right | 2 |

(continued)

| Patent information classification | 몸 ? patent information | |
|---|---|---|
| | Evaluation factor | Points |
| Trial information | Number of trials on invalidity | 0 |
| | Number of quotation of trial to positive confirmation on the scope of rights | 1 |
| | Number of rejection of trial to negative confirmation on the scope of rights | 1 |
| | Number of correction trials | 0 |

Among the patent information for the patent "A" obtained in the step (i), the patent information of the patent "A" of Table 5 corresponding to the evaluation factors of Table 4 are input so that the points for the rightness evaluation result for the patent "A" may be obtained.

Although only the process of obtaining the rightness evaluation information for the patent "A" has been described above, evaluation results for the technicality and the usability of the patent "A" may also obtained using the above-described method.

In the meantime, the evaluation factor and the impact index of the model used to evaluate the technicality and the usability may be different from the evaluation factor and the impact index of the model used to obtain the rightness evaluation result. In the meantime, as the evaluation result points for the patent "A", when the point for the rightness evaluation result is 32, the points of the technicality evaluation result and the usability evaluation result are 34 and 25, respectively, using the above-described method, the comprehensive point for the patent "A" may be 91 points obtained by adding the points for the rightness evaluation result, the points for the technicality evaluation result, and the points for the usability evaluation result.

In the meantime, relative evaluation for the patent "A" may also be performed by comparing the patent "A" with other patent stored in the patent DB.

For example, the relative evaluation of the patent "A" may be performed such that the comprehensive points for all patents stored in the patent DB are calculated by the above-described method and the calculated comprehensive points for all the patents are sorted in an ascending order, and the grades are divided in accordance with a predetermined ratio, and then the position of the patent "A" in the grades divided by a predetermined ratio is detected to assign a patent evaluation grade for the patent "A".

More specifically, the grades divided in accordance with the predetermined ratio are represented in Table 6.

[Table 6]

| Percentage | 4 | 7 | 12 | 17 | 20 | 17 | 12 | 7 | 4 |
|---|---|---|---|---|---|---|---|---|---|
| Cumulative percentage (%) | 4 | 11 | 23 | 40 | 60 | 77 | 89 | 96 | 100 |
| Grade | 1 | 2 | 3 | 4 | 5 | 6 | 7 | 8 | 9 |

A boundary value of a patent grade assigning percentage (%) is exemplified as a percentage (%) and may also vary. When the patent grade for every technical field is generated based on the above-described contents, a status of the patent in the corresponding technical field may be checked. Further, a criterion for making a decision on maintenance and management of the patents may be suggested based thereon.

For example, an average grade of patents registered by an "A" electronics (a concerned company) is an AA level and an average grade of patents registered by a "B" electronics, it is evaluated that the status of the patents of the "A" electronics (the concerned company) is higher than that of the patents of the "B" electronics.

In the meantime, a boundary value of a percentage (%) for dividing the grades is exemplified as a percentage (%) and may also vary.

As another utilization plan, when patent evaluation results corresponding to a plurality of patents in a specific technical field of an arbitrary company are calculated and then the patent evaluation results are calculated on a year basis, it may be utilized as data for analyzing a fluctuation of patent evaluation of one company.

4. Patent evaluating system according to exemplary embodiment of the present disclosure

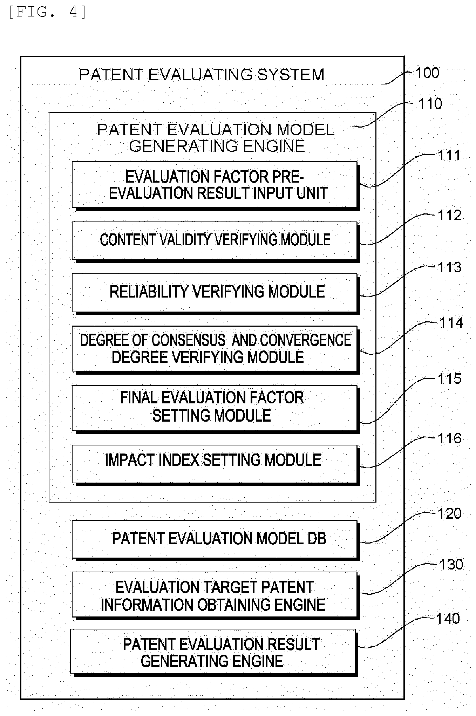

FIG. 4 is a diagram of a patent evaluating system using a structural equation model according to an exemplary embodiment of the present disclosure.

The patent evaluating system 100 according to an exemplary embodiment of the present disclosure includes a patent evaluation model generating engine 110 which generates a patent evaluation model, a patent evaluation model DB 120 in which a patent evaluation model generated in the patent evaluation model generating engine 110 is stored, an evaluation target patent information obtaining engine 130 which obtains information of a patent to be evaluated, and a patent evaluation result generating engine 140 which generates a patent evaluation result based on the information of the patent to be evaluated obtained from the patent information obtaining engine 130 and the patent evaluation model stored in the patent evaluation model DB 120. According to an exemplary embodiment of the present disclosure, the components maybe distributed in one or more servers connected through a wired/wireless network.

More specifically, the patent evaluation model generating engine may perform the step (a) S100 of the patent evaluating method using a structural equation according to an exemplary embodiment of the present disclosure.

In other words, the patent evaluation model generating engine 110 may generate one or more different patent evaluation models in accordance with the technical field of the patent and the evaluation index using a structural equation. The evaluation indexes may include an index indicating a degree for maintaining an exclusive status of the patent to be evaluated against a patent dispute with a third party (referred to as "rightness"), an index indicating a degree to which the patent to be evaluated accords with or leads the technology trend (referred to as technicality), and an index indicating a degree to which the patent to be evaluated is utilized in the business and an applicability (referred to as "usability).

In the meantime, the patent evaluation model generating engine 110 may include an evaluation factor pre-evaluation result input unit 111 which receives pre-evaluation result of importance for every patent evaluation factor, a content validity verifying module 112 which verifies the content validity of the received importance pre-evaluation result for every patent evaluation factor, a reliability verifying module 113 which verifies a reliability for the importance pre-evaluation result for the patent evaluation factor on which the content validity is performed, a degree of consensus and convergence degree verifying module 114 which verifies the degree of consensus and the convergence degree for the importance pre-evaluation result for the patent evaluation factor on which the reliability validation is performed, a final evaluation factor setting module 115 which sets a final evaluation factor based on the verification results of the content validity verifying module 112, the reliability verifying module 113, and the final evaluation factor setting module 115, and an impact index setting module 116 which sets an impact index for every final evaluation factor.

The content validity verifying module 112 performs the content validity verifying step S120 of the present disclosure, the reliability verifying module 113 performs the reliability verifying step S130, and the degree of consensus and convergence degree verifying module 114 performs the degree of consensus and convergence degree verifying step S140.

Further, the final evaluation factor setting module 115 and the impact index setting module 116 may performs the final evaluation factor generating step S150 and the impact index setting step S160 of the above-described patent evaluating method using a structural equation according to the exemplary embodiment of the present disclosure.

The final evaluation factors and the impact indexes may vary depending on the technical field of the patent and the evaluation indexes of the patent. The impact index may be set such that an impact index of any one evaluation factor among the final evaluation factors is set as 1 and the impact indexes of the remaining final evaluation factors may be relatively set based on the impact index of any one evaluation factor which is set to be 1.

In the meantime, the evaluation target patent information obtaining engine 130 may obtain patent information of the patent to be evaluated by searching a patent DB in which a patent specification, drawings, and relevant patent information are loaded, with respect to an application number, a publication number, a registration number of the patent to be evaluated, or receive the patent information of the patent to be evaluated from a user. The patent information of the patent to be evaluated refers to relevant information generated in association with the patent from the time of occurrence to the expiration of one patent, including an application form including a patent specification and drawings, an examination history, progress information (administrative information) after registration of rights. The patent information may include a technical field of the patent, application information, examination information, registration information, patent right information, patent trial information, and litigation information.

Further, the evaluation target patent information obtaining engine 130 may evaluate the patent in accordance with the procedure described in the present disclosure by obtaining the patent information for entire patents of a predetermined DB, instead of obtaining the patent information by searching individual patents from the patent DB. Further, the patent DB may be grouped for a predetermined technical field and for a right holder and during the process of obtaining the patent information, the system may evaluate the patents by extracting patents from the patent DB for a predetermined technical field and a right holder, in accordance with requirements.

For example, in the patent DB of the present disclosure, patent specifications and drawings of entire patents of Korea and available foreign countries for a predetermined period or a present time and relevant patent information may be loaded. (1) When the patent evaluation is performed for a predetermined individual patent, the patent information of the corresponding patent is obtained to be input to the evaluation model of the present disclosure to perform the evaluation and (2) patent information for a patent group for every country or every company (every applicant) for patents during a predetermined period is extracted from the patent DB to perform the patent evaluation for the corresponding patent group. In this case, as it will be described below, the evaluation grade for a predetermined patent group may be calculated and the patent groups may also be compared.

In the meantime, the application information may include a number of independent claims, a length of an independent claim, a number of dependent claims, an average length of the dependent claim, a number of claim series, a number of drawings, a length of a description of the invention, divisional application, a number of claims of priority, and a number of overseas patent families.

Further, the examination information may include a number of IPCs, early publication, accelerated examination, re-examination, a number of presented opinions, a number of provision of information, a total number of citation, a difference between citation and filing date, a number of papers/foreign patents among prior documents, a number of papers/foreign patents of cited documents. The registration information may include a number of annual registrations.

The patent right information may include a number of inventors, whether to determine registration for an extension of patent term, a number of licensees, a number of changed holders of right, a number of established pledge rights of a financial company.

In the meantime, the trial information may include a number of trials on invalidity, a number of appeals against decision of rejection, a number of quotation of trial to positive confirmation on the scope of rights, a number of rejection/withdraw/dismissal of trials to positive confirmation on the scope of rights, a number of rejection of trial to negative confirmation on the scope of rights, a number of quotation/withdraw/dismissal of trials to negative confirmation on the scope of rights, and a number of correction trials.

In the meantime, the patent evaluation result generating engine 140 may generate the evaluation result by any one of a first method of generating the evaluation point as a comprehensive point by adding point corresponding to each evaluation index for the patent to be evaluated and a second method of generating the evaluation point corresponding to every evaluation index (rightness, technicality, and usability). In the meantime, the patent evaluating system 100 according to an exemplary embodiment of the present disclosure may further include an evaluation grade calculating unit which calculates an evaluation grade of the patent to be evaluated based on the comprehensive point of the patent to be evaluated generated by the first method.

More specifically, the patent evaluation grade calculating unit may include a normal distribution function generating module which generates a normal distribution function based on the comprehensive point corresponding to each of the plurality of patents in the technical field same as the patent to be evaluated by the first method in the patent evaluation result generating engine.

As described above, the grade of the patent to be evaluated may be calculated depending on a position of the comprehensive point of the patent to be evaluated in the normal distribution function.

When the patent grade for every technical field is generated based on the above-described contents, a status of the patent in the corresponding technical field may be checked. Further, a criterion for making a decision on maintenance and management of the patents may be suggested based thereon.

For example, an average grade of patents registered by an "A" electronics (a concerned company) is an AA level and an average grade of patents registered by a "B" electronics, it is evaluated that the status of the patents of the "A" electronics (the concerned company) is higher than that of the patents of the "B" electronics.

In the meantime, a boundary value of a percentage (%) for dividing the grades is exemplified as a percentage (%) and may also vary.

As another utilization plan, when patent evaluation results corresponding to a plurality of patents in a specific technical field of an arbitrary company are calculated and then the patent evaluation results are calculated on a year basis, it may be utilized as data for analyzing a fluctuation of patent evaluation of one company.

In the meantime, the present disclosure may also be configured to include a computer program executing the above-described patent evaluating method using a structural equation according to tan exemplary embodiment of the present disclosure and a computer readable storage medium in which the computer program is stored.

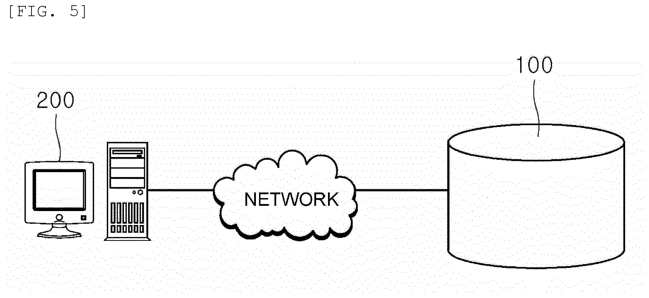

As illustrated in FIG. 5, the patent evaluating system using a structural equation according to tan exemplary embodiment of the present disclosure may be configured by at least one patent evaluating systems or servers 100 and the server 100 is connected to a wired/wireless network to provide the patent evaluation result to a user device 200. When the server 100 receives a request for an evaluation service for a specific patent from the user device 200, the server 100 may provide an evaluation result for the patent and a detailed operating method has been described above.

The server 100 according to an exemplary embodiment of the present disclosure may include a processor, a memory which stores and executes program data, a permanent storage unit, a communication port communicating with an external device, and a user interface device. Methods implemented by a software program module or algorithm may be stored on a computer readable storage medium as computer readable codes or program commands which can be executed on the processor. The computer readable recording medium is distributed in computer systems connected through a network and computer readable code is stored therein and executed in a distributed manner.

In the meantime, the technical spirit of the present disclosure has been specifically described according to the exemplary embodiment, but it should be noted that the exemplary embodiments are for explanation purposes only and not for the purpose of limitation. Further, it will be understood by those skilled in the art that various embodiments are allowed within the technical spirit of the present disclosure.

**Claims**

1. A system (100) comprising:

a patent evaluation model generating engine (110) for generating different patent evaluation models depending on technical fields and patent evaluation indexes using a structural equation model to find and analyze mutual causal relationship between several variables which affect dependent variables to process factor analysis and path analysis,
a patent evaluation model database (120) for storing the patent evaluation model generated in the patent evaluation model generating engine (110),
an evaluation target patent information obtaining engine (130) for obtaining information of a large amount of patents to be evaluated, and
a patent evaluation result generating engine (140) which generates a patent evaluation result for every technical field based on the information of the patents to be evaluated obtained from the patent information obtaining engine (130) and the patent evaluation model stored in the patent evaluation model database (120).

2. The system according to claim 1, wherein the evaluation indexes include a rightness index, a technicality index, a usability index, or a combination thereof.

3. The system according to claim 1, wherein the patent evaluation model generating engine (110) receives pre-evaluation result of importance for every patent evaluation factor,

verifies a content validity of the received importance pre-evaluation result for every patent evaluation factor,
verifies a reliability for the importance pre-evaluation result for the patent evaluation factor on which the content validity is performed,
verifies a degree of consensus and a convergence degree for the evaluation survey result on which the reliability validation is performed,
sets patent information for which for the evaluation survey result corresponding to the evaluation index are verified
sets patent information for which the content validity, the reliability, the degree of consensus, and the convergence degree for the evaluation survey result corresponding to the evaluation index are verified, as final evaluation factors, and
sets an impact index for every final evaluation factor.

4. The system according to claim 3, wherein the patent evaluation model generating engine (110) calculates CVR (content validity ratio) for every survey result and checks whether the calculated CVR value of the corresponding survey question satisfies a minimum CVR value in accordance with the number of survey respondents.

5. The system according to claim 3, wherein the patent evaluation model generating engine (110) performs respectively the pre-evaluating process on every evaluation factor to derive the final evaluation factors.

6. The system according to claim 3, wherein the patent evaluation model generating engine (110) varies the final evaluation factors and the impact indexes depending on the technical fields of the patent and the evaluation indexes of the patent,
the impact indexes are set such that an impact index of any one evaluation factor among the final evaluation factors is set as 1 and the impact indexes of the remaining final evaluation factors are relatively set based on the impact index of any one evaluation factor which is set to be 1.

7. The system according to claim 1, wherein the evaluation target patent information obtaining engine (130) evaluates the patents in accordance with the by obtaining the patent information for entire patents of a patent DB, instead of obtaining the patent information by searching individual patents from the patent DB,
the patent DB groups patents for a predetermined technical field and a right holder during the process of obtaining the patent information.

8. The system according to claim 1, wherein the patent evaluation result generating engine (140) generates the evaluation result by a first method of generating the evaluation point as a comprehensive point by adding point corresponding to each evaluation index for the patent to be evaluated, a second method of generating the evaluation point corresponding to every evaluation index, or a combination thereof.

9. The system according to claim 8, wherein the patent evaluation result generating engine (140) further includes an evaluation grade calculating unit which calculates an evaluation grade of the patent to be evaluated based on the comprehensive point of the patent to be evaluated generated by the first method.

10. The system according to claim 9, wherein evaluation grade calculating unit calculates the comprehensive points for all patents stored in the patent DB by the first method,

sorts the calculated comprehensive points for all the patents in an ascending order,
divides grades in accordance with a predetermined ratio, and
detects the position of target patent in the grades divided by a predetermined ratio to assign the patent evaluation grade for the target patent.

[FIG. 1]

```
                          ┌─────────┐
                          │  START  │
                          └────┬────┘
                               │
                               ▼
┌───────────────────────────────────────────────────┐
│   (a) STEP OF GENERATING ONE MORE EVALUATION       │ ─── S100
│   MODELS HAVING PREDETERMINED EVALUATION           │
│   FACTOR USING STRUCTURAL EQUATION                 │
└───────────────────────────┬───────────────────────┘
                            │
                            ▼
┌───────────────────────────────────────────────────┐
│   (b) STEP OF OBTAINING PATENT INFORMATION         │ ─── S200
│   FROM PATENT TO BE EVALUATED                      │
└───────────────────────────┬───────────────────────┘
                            │
                            ▼
┌───────────────────────────────────────────────────┐
│   (c) STEP OF SELECTING EVALUATION MODEL           │ ─── S300
│   CORRESPONDING TO PATENT TO BE EVALUATED          │
│   AMONG ONE OR MORE EVALUATION MODELS              │
│   GENERATED IN STEP (a)                            │
└───────────────────────────┬───────────────────────┘
                            │
                            ▼
┌───────────────────────────────────────────────────┐
│   STEP OF GENERATING EVALUATION RESULT OF          │ ─── S400
│   PATENT TO BE EVALUATED FROM PATENT               │
│   INFORMATION OBTAINED IN (b) AND EVALUATION       │
│   MODEL OF (c)                                     │
└───────────────────────────┬───────────────────────┘
                            │
                            ▼
                       ┌─────────┐
                       │   END   │
                       └─────────┘
```

[FIG. 2]

```
                        ┌─────────────┐
                        │    START    │
                        └──────┬──────┘
                               │
                               ▼
      ┌─────────────────────────────────────────────────┐
      │  STEP OF RECEIVING EVALUATION SURVEY RESULT       │
      │  FOR IMPORTANCE OF INDIVIDUAL EVALUATION          │───S110
      │  FACTOR PERFORMED ON PATENT EXPERT IN            │
      │  EVERY TECHNICAL FIELD                            │
      └─────────────────────────┬───────────────────────┘
                                ▼
      ┌─────────────────────────────────────────────────┐
      │  CONTENT VALIDITY VERIFYING STEP OF VERIFYING     │
      │  CONTENT VALIDITY RATIO FOR EVERY EVALUATION     │───S120
      │  FACTOR FOR EVALUATION SURVEY OF IMPORTANCE      │
      │  OF INDIVIDUAL EVALUATION FACTORS                 │
      └─────────────────────────┬───────────────────────┘
                                ▼
      ┌─────────────────────────────────────────────────┐
      │  RELIABILITY VERIFYING STEP OF VERIFYING          │
      │  RELIABILITY FOR EVERY EVALUATION FACTOR FOR     │───S130
      │  EVALUATION SURVEY RESULT ON WHICH CONTENT       │
      │  VALIDITY VERIFYING STEP IS PERFORMED             │
      └─────────────────────────┬───────────────────────┘
                                ▼
      ┌─────────────────────────────────────────────────┐
      │  DEGREE OF CONSENSUS AND CONVERGENCE DEGREE       │
      │  VERIFYING STEP OF VERIFYING DEGREE OF CONSENSUS  │
      │  AND CONVERGENCE DEGREE FOR EVERY                │───S140
      │  EVALUATION FACTOR FOR EVALUATION SURVEY         │
      │  RESULT ON WHICH RELIABILITY VERIFYING STEP IS   │
      │  PERFORMED                                        │
      └─────────────────────────┬───────────────────────┘
                                ▼
      ┌─────────────────────────────────────────────────┐
      │  FINAL EVALUATION FACTOR GENERATING STEP OF       │
      │  SURVEY QUESTION ON WHICH CONTENT VALIDITY,      │
      │  RELIABILITY, VALIDITY ARE VERIFIED AMONG SURVEY │───S150
      │  QUESTIONS CORRESPONDING TO EVALUATION INDEX,    │
      │  AS FINAL EVALUATION FACTOR                       │
      └─────────────────────────┬───────────────────────┘
                                ▼
      ┌─────────────────────────────────────────────────┐
      │  IMPACT INDEX SETTING STEP OF SETTING IMPACT      │
      │  INDEX OF FINAL EVALUATION FACTOR SET IN FINAL   │───S160
      │  EVALUATION FACTOR GENERATING STEP               │
      └─────────────────────────┬───────────────────────┘
                                ▼
                        ┌─────────────┐
                        │     END     │
                        └─────────────┘
```

[FIG. 3]

ELECTRIC/ELECTRONIC/IT-RIGHTNESS

EVALUATION FACTOR 1 — 0.69
EVALUATION FACTOR 2 — 0.86
EVALUATION FACTOR 3 — 1
EVALUATION FACTOR 4
EVALUATION FACTOR 5 — 0.75
RIGHTNESS

ELECTRIC/ELECTRONIC/IT-TECHNICALITY

EVALUATION FACTOR 6 — 0.76
EVALUATION FACTOR 7 — 1
EVALUATION FACTOR 8 — 0.83
EVALUATION FACTOR 9
EVALUATION FACTOR 10 — 0.87
EVALUATION FACTOR 11
TECHNICALITY

CHEMICAL/BIO/MATERIAL-RIGHTNESS

EVALUATION FACTOR 1 — 0.65
EVALUATION FACTOR 2 — 0.52
EVALUATION FACTOR 3 — 1
EVALUATION FACTOR 4 — 0.82
EVALUATION FACTOR 5 — 0.72
RIGHTNESS

[FIG. 4]

PATENT EVALUATING SYSTEM — 100

— 110

PATENT EVALUATION MODEL
GENERATING ENGINE

— 111

EVALUATION FACTOR PRE-
EVALUATION RESULT INPUT UNIT

— 112

CONTENT VALIDITY VERIFYING MODULE

— 113

RELIABILITY VERIFYING MODULE

— 114

DEGREE OF CONSENSUS AND CONVERGENCE
DEGREE VERIFYING MODULE

— 115

FINAL EVALUATION FACTOR
SETTING MODULE

— 116

IMPACT INDEX SETTING MODULE

— 120

PATENT EVALUATION MODEL DB

— 130

EVALUATION TARGET PATENT
INFORMATION OBTAINING ENGINE

— 140

PATENT EVALUATION RESULT
GENERATING ENGINE

[FIG. 5]

Europäisches
Patentamt

European
Patent Office

Office européen
des brevets

# EUROPEAN SEARCH REPORT

**Application Number**

EP 21 21 8420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/092361 A1 (KIPA [KR]) 19 June 2014 (2014-06-19) * page 2, paragraph 15 - page 3, paragraph 23; figure 3 * * page 14, paragraph 75 * * page 15, paragraph 76 * * page 23, paragraph 90 - page 25, paragraph 103 * ----- | 1-10 | INV. G06Q10/10 G06Q50/18 |

**TECHNICAL FIELDS SEARCHED (IPC)**

G06Q

The present search report has been drawn up for all claims

| Place of search | Date of completion of the search | Examiner |
|---|---|---|
| Munich | 20 April 2022 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 21 21 8420

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2022

| Patent document cited in search report | Publication date | Patent family member(s) | Publication date |
|---|---|---|---|
| WO 2014092361 A1 | 19-06-2014 | NONE | |

For more details about this annex : see Official Journal of the European Patent Office, No. 12/82

**EP 4 040 360 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110068278

**Non-patent literature cited in the description**

- **C. H. LAWSHE.** A quantitative approach to content validity. *Personnel psychology,* 1975, vol. 28